Europäisches Patentamt

European Patent Office

Office européen des brevets

(11) Publication number:

**0 036 883**

**B1**

(12) **EUROPEAN PATENT SPECIFICATION**

(45) Date of publication of patent specification: **27.03.85**

(21) Application number: **80902013.4**

(22) Date of filing: **24.09.80**

(86) International application number:
**PCT/US80/01240**

(87) International publication number:
**WO 81/00818 02.04.81 Gazette 81/08**

(51) Int. Cl.⁴: **B 05 D 3/06**

(54) **RELEASE COATINGS.**

(30) Priority: **24.09.79 US 78411**

(43) Date of publication of application:
**07.10.81 Bulletin 81/40**

(45) Publication of the grant of the patent:
**27.03.85 Bulletin 85/13**

(84) Designated Contracting States:
**DE FR GB**

(56) References cited:
**FR-A-1 327 512**
**GB-A- 359 390**
**GB-A- 875 016**
**GB-A- 892 818**
**US-A-2 607 711**
**US-A-3 162 543**
**US-A-3 793 102**
**US-A-3 929 545**
**US-A-4 030 955**
**US-A-4 041 200**
**US-A-4 070 526**
**US-A-4 113 894**
**US-A-4 138 508**

(73) Proprietor: **SCOTT PAPER COMPANY**
**Scott Plaza 2**
**Philadelphia, PA 19113 (US)**

(72) Inventor: **GRAY, Lorin S., III**
**39 Concord Street**
**Portland, ME (US)**
Inventor: **MATTOR, John A.**
**Box 85**
**Bar Mills, ME (US)**

(74) Representative: **McCall, John Douglas et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 036 883

## Description

### Technical field

The present invention relates to coatings for paper and other sheet-like substrates, and particularly to release coatings which are characterized by their ability to separate intact from a surface which is normally adherent.

### Background art

A number of processes exist in which a plastic sheet or film is formed on or against a release sheet and then separated from the release sheet after taking steps, such as cooling or curing, to set the sheet or film. Curing, where necessary, may be accomplished by heat, by peroxide catalyst, or U.V. radiation or by electron beam radiation. The release sheet provides a surface from which the set plastic material can be readily separated and imparts to the surface of the plastic material the quality of finish of the release surface. For example, a desired textured surface can be provided on the surface of the plastic material by forming on or against a release sheet having the reverse surface effect of the desired textured surface.

One example of such forming processes is "casting", wherein a resinous material, such as polyvinyl chloride or polyurethane resin, in a flowable state is deposited or "cast" onto the release sheet surface, heated, cured and cooled to consolidate the resinous material into a continuous self-supporting film, and stripped from the support. The release sheet is normally provided with a desired surface effect, such as high gloss, texturing or an embossed configuration, and the reverse of the surface effect is replicated on the cast film.

Another example of such forming processes is "panel pressing" of decorative plastic laminates, which can be either of the high pressure or low pressure type. In high pressure panel pressing, decorative laminates are conventionally prepared by assembling in a stacked relationship a plurality of core sheets, each of which is a web of paper impregnated with a resinous material, such as phenolic resin. Immediately positioned above the core sheet assembly is a decorative sheet, which is a resin saturated sheet having a solid color or a suitable design thereon. Superimposed above the decorative sheet is generally an overlay sheet which is a thin sheet of fine paper impregnated with a noble thermosetting resin, such as a melamine formaldehyde resin or an unsaturated polyester resin and the like (and is generally the same resin used to impregnate the decorative sheet). The entire assembly of core sheets, decorative sheet, and overlay sheet is placed between platens in a press and consolidated by application of heat and pressure. Generally, a release sheet having the desired surface effect to be reproduced in reverse in the surface of the overlay sheet is placed against the overlay sheet during pressing. High pressure laminates after being consolidated are usually further glued to a structural substrate, such as particle board or plywood. Low pressure panel pressed decorative laminates are made in a similar manner to high pressure laminates, but generally involve lamination of the decorative sheet directly to particle board or other structural substrate.

Other pressing processes where a plastic sheet or film is formed on or against a release sheet may not include the lamination step, but only texturing a moldable plastic surface which is already laminated. For example, a plastic film could be coated directly onto particle board or plywood and then textured by pressing against a release sheet having the desired textured pattern in its surface while setting the plastic film. (See, for example, U.S. Patent No. 4,113,894 to Koch).

Other uses for release sheets include heat transferable printed designs, pressure sensitive adhesive coated webs, and interleavers for panel pressing. The transferable printed designs are printed on the release sheet with a polyvinyl chloride plastisol ink or offset printing ink and overcoated with a polyvinyl chloride plastisol. When placed against a receptive surface, such as a T-shirt, and heated, the printed design and overlayer are transferred to the receptive surface where it sets upon cooling. In this application, the release surface must be capable of being printed upon and capable of releasing the printed material and overlying layer of polyvinyl chloride plastisol when it is transferred.

On the other hand, pressure sensitive coated webs are typically adhesive coated tapes, labels or decals and the like which are attached to a release surface for easy removal later when it is desired to permanently attach them to an object. The release surface must permit temporary attachment of the pressure sensitive adhesive, but also permit easy removal. The pressure sensitive adhesive laminates can be formed by coating a film of the adhesive onto the release surface and then attaching the backing sheet (i.e. tape), or the adhesive can be first coated on the backing sheet and then laminated to the release sheet.

An interleaver is a release sheet placed between groups of heat and pressure consolidated laminae pressed at the same time in back-to-back configuration to form two distinct decorative laminates. The release sheet in this case separates the laminates from each other and thereby permits more than one to be pressed at the same time between the same platens. (See, for example U.S. Patent No. 4,030,955 to Antonio et al.).

Release sheets are typically produced by coating, treating, or impregnating a paper web or other sheet-like substrate with a release coating of such materials as polymethylpentene, polypropylene, polyfluorocarbons, silicone oil, thermoset silicone resins, and other conventional release agents.

US—A—4,070,526 discloses a radiation curable composition which may be used as a coating to provide release of adhesives. The composition comprises a triorganosiloxane-endblocked polydiorganosiloxane fluid, a methylvinylpolysiloxane and a vinylic monomer.

2

Release papers may also comprise a base sheet provided with at least one first coating, conventionally referred to as a base coating, and a release coating overlying the base coating. The base coating typically comprises a pigment or filler, such as a paper coating grade clay together with an adhesive binder. The purpose of the base coating is to level and seal the surface. The pigment in the coating provides a smooth surface by masking the irregularities in the surface of the base sheet, and the adhesive binds the pigment and prevents undue penetration into the base sheet by the subsequently applied release coating. The base coating thereby maximizes the effectiveness of the release coating applied by preventing excessive penetration of the release coating into the body-stock.

Surface effects on the release sheet, when desired, are conventionally provided by any one of a number of techniques. The release coating can be dried to a smooth surface gloss or surface effects such as texturing or embossing can be provided in the coating by mechanical means, applied either to the surface of the base paper before coating or to the paper after the release coating is applied. Another technique employed for producing a release coating with a textured surface is to extrude a molten thermoplastic film, such as polypropylene or polymethylpentene, onto a paper surface, cool it and then pass it between matched steel embossing rolls.

Disclosure of the invention

In accordance with one embodiment of the present invention, there is provided a method of forming a plastic sheet or film, which comprises bringing the plastic on or against an easy release surface, setting the plastic in sheet or film form and stripping it from the release surface, the release surface having a substrate coated on at least one side with a coating composition characterised in that the coating composition comprises an acrylic functional material (i.e. a material containing a polymerizable acrylic group) which has been polymerized by electron beam radiation, some of the acrylic functional material having one acrylic group and some having three or more acrylic groups per molecule before polymerization.

In accordance with a second embodiment of the invention there is provided a method of forming a plastic sheet or film, which comprises bringing the plastic on or against an easy release surface, setting the plastic in sheet or film form and stripping it from the release surface, the release surface having a substrate coated on at least one side with a coating composition characterised in that the coating composition comprises an acrylic functional material (i.e. a material containing a polymerizable acrylic group) which has been polymerized by electron beam radiation from about 15% to about 85% by weight of the acrylic functional material being provided by one or more aliphatic non-cyclic mono-functional acrylates and the remainder is provided by one or more multifunctional acrylates.

Also according to the present invention there is provided a composite comprising a sheet-like substrate, a coating on at least one side of the substrate to provide a release surface, and on top of the release surface, a strippable sheet or film, characterized in that said release coating comprises an acrylic functional material (i.e. a material containing a polymerisable acrylic group) which has been polymerized by electron beam radiation, some of the acrylic functional material having one acrylic group and some having three or more acrylic groups per molecule.

Further according to the present invention there is provided a composite comprising a sheet-like substrate, a coating on at least one side of the substrate to provide a release surface, and on top of the release surface, a strippable sheet or film, characterized in that said release coating comprises an acrylic functional material (i.e. a material containing a polymerizable acrylic group) which has been polymerized by electron beam radiation from about 15% to about 85% of the acrylic functional material being provided by one or more aliphatic monofunctional acrylates and the remainder being provided by one or more multi-functional acrylates.

Surprisingly, the invention provides a coating having excellent release properties without need for conventional release agents such as polysiloxanes (thermoset silicone resins). Accordingly, one embodiment of the invention employs a non-polysiloxane containing coating. In a preferred embodiment of the invention, from about 15% to about 85% of the acrylic functional material is provided by one or more aliphatic noncyclic mono-functional acrylates (having one acrylic functional group per molecule before polymerization), and the remainder is provided by one or more multi-functional acrylates (having two or more acrylic functional groups per molecule).

The aliphatic non-cyclic monofunctional acrylate material is necessary to provide the superior release performance of which the invention in its preferred form is capable. However, monofunctional acrylates cannot practically be crosslinked without the addition of some multi-functional groups per molecule. A portion of the multi-functional acrylate material can be provided by di-functional acrylates, and even all of it can be so provided if a longer cure time or poorer release performance can be tolerated.

It is preferable that the monofunctional acrylate material provide from about 33% to about 66% of the total acrylate material in the coating composition, but acceptable although poorer performance can be obtained with less, down to about 15%, or more, up to about 85%, of the total acrylic material being monofunctional. The chain length of the monofunctional acrylate material also affects the release performance of the coating composition. Such material having a molecular weight of from 128 to 380 provides acceptable performance. However, performance dramatically improves with an increase in molecular weight from 128 up to about 212. Above a molecular weight of 212, a further increase in chain

3

length improves release performance at a slower rate. The most preferred molecular weight range is from 212 to 324.

Another advantage of the monofunctional acrylates in the coating composition is that they have less sensitivity to dose rate changes than do multi-functional acrylates. That is, a given dosage applied to a given acrylate composition will provide poorer release properties as the rate of applying that dose is increased, but this sensitivity is decreased as the percentage of monofunctional material in the composition is increased.

The present invention is also an improvement in a method of forming a plastic sheet or film on or against an easy release surface, setting the plastic sheet or film, and stripping it from the release surface. The improvement is the release surface being provided by a substrate coated on at least one side with the coating composition described above. The invention surprisingly provides a release surface which is satisfactory for most if not all forming materials. There is no need to employ conventional release agents, such as polysiloxanes, and a preferred form of the invention uses a non-polysiloxane containing coating composition.

The term "forming" is used herein in a broad sense and includes the actual formation of a plastic sheet or film from a flowable state as well as the pressing of a moldable, already-existing plastic sheet or film. In some embodiments, the plastic sheet or film is provided by a polyvinyl chloride plastisol or polyurethane which is cast onto the release surface in a flowable state and set to provide a surface effect which is the reverse of the release surface. In other embodiments, the plastic sheet or film is provided by an outermost lamina in a heat and pressure consolidated decorative laminate which is pressed against the release surface. Where the lamina pressed against the release surface is the decor sheet, or overlay sheet if one is used, the surface of the decor sheet or overlay sheet will be molded during consolidation to have a surface effect which is the reverse of the release surface. Where the lamina pressed against the release surface is the back most lamina which will later be glued to a reinforcing substrate, the release surface substrate is coated on both sides with the release coating composition and is an interleaver separating two groups of laminae consolidated in back-to-back configuration.

The invention is also a composite comprising a sheet-like substrate, with the coating composition described above on at least one side of the substrate to provide a release surface, and on top of the release surface, a strippable sheet or film. The substrate is preferably provided by paper coated with a base coat to reduce penetration of the release surface coating into the paper substrate. The strippable sheet or film can be provided by, for example, cast and set films of such materials as polyvinyl chloride and polyurethane, one or more laminae in a consolidated decorative laminate, or the transferable film in a heat transferable printed design. Such composites can be sold intact for later uses which require stripping of the sheet or film from the release surface.

The polymerization energy is provided by conventional electron beam radiation units readily available. They typically consist of a transformer capable of stepping up line voltage and an electron accelerator. In one type of machine the electrons are generated from a point source filament and then scanned electromagnetically like a television set to traverse the coated object. In another type of machine, the electrons are generated in a curtain from an extended filament which can irradiate the entire width of the surface without the need for scanning. While commercial machines are available with accelerating voltages of over a million electron volts, the range for this and similar coating applications is typically from 150—300 KV (kiloelectron volts).

The coating applied to the paper must be capable of being cured by electron beam radiation, and the polymerization energy for the release coating must be provided by electron beam radiation. It is the combination of the acrylic functional material and the electron beam radiation which surprisingly provides the release properties of the invention. Coatings of this type may be polymerized by a variety of other means, such as heat, catalyst and UV radiation, but only electron beam radiation will satisfactorily provide the release properties of the invention. On the other hand, acrylates are the primary group of polymerizable materials which has a fast enough cure rate to be able to use beneficially the high energy of electron beam radiation. Electron beam radiation energy level per electron is much greater than the energy level of, for example, a photon of UV radiation, and electron beams can readily penetrate into and cure a thick coating.

The major component of electron-beam curable formulas suitable for the invention is an acrylic functional oligomer or monomer. By acrylic functional it is meant that the material includes acrylic groups which are capable of entering into a polymerization reaction. The acrylic functional material can have one or more acrylic functional groups per molecule before polymerization. Multi-functionality, such as two or more acrylic functional groups per molecule is highly desirable for at least some of the material, since the polymerized coating will have greater cross-linking density, and therefore, greater inertness to the sheets or films, and in some cases their solvents, formed on or against them. However, an excessive amount of material with a large number of acrylic functional groups per molecule can result in too much shrinking of the coating upon polymerization, as well as cracking, brittleness and curl. In addition, the coating material can become too viscous to coat conveniently. Therefore, it is preferable to include some material with only one acrylic functional group per molecule when some of the material has three or more acrylic functional groups per molecule. Such preferred coatings can also contain some material with two acrylic functional groups per molecule along with the material having one functional group and the material having three or more functional groups before polymerization.

4

The coating composition can include materials other than the acrylic functional material. For example, viscosity control additives, such as colloidal silica or volatile solvents, or surface texture materials, such as starch grains or silica, might be included. In addition, filler material such as conventional paper coating pigments can be included to reduce costs of the coating. However, the amount of acrylic functional material in the coating composition must be sufficient to provide a continuous, hard, polymerized layer in the areas where it is coated. It is preferable that the acrylic functional material provide at least about 30% by weight of the total coating composition, and more preferable that it provide at least about 40%. Conventional release agents, such as polysiloxanes, can also be added and in some cases will further enhance release, such as when curing the coating composition against another surface or film, which tends to decrease the release properties of the cured coating, but they are not needed to provide adequate release in most cases and it is preferable in most cases to avoid their additional cost and their disadvantage of permitting transfer of part of their material in the formed sheet or film.

The release coating composition can be coated on a variety of sheet-like substrates, such as paper, metal foils, and plastic films. It is highly desirable that the substrate be somewhat resistant to penetration of the release coating composition to provide a hold-up function which maximizes efficiency of the coating composition although sufficient penetration into the substrate is required. The substrate is preferably paper with a base coat to prevent excessive penetration of the release coating composition. Paper is highly desirable because of its low cost, flexibility and other physical properties.

Best mode for carrying out the invention

The following examples illustrate the invention.

Example 1

A paper base sheet of hardwood and softwood fibers and having a basis weight of 121 grams per square meter (82 lbs. per ream of 3,300 sq. ft.) was selected as the starting material for the substrate. The base sheet was first base coated with adhesive/pigment coatings to provide a total substrate weight of about 154 grams per square meter (104 lbs. per ream). The base coatings imparted resistance to penetration of the subsequently applied release coating.

A release coating of the present invention was applied by a meyer rod over the base coated substrate in an amount sufficient to provide a continuous, uniform layer. The release coating was a mixture of the following, obtained from Sun Chemical Co. as Sun-cure GA-1293:

|  | parts by weight |
|---|---|
| A monomeric polyacrylate with three acrylic groups per molecule, mol. wt. 500—600 | 56 |
| Brominated polyester | 20 |
| Epoxy acrylate | 10 |
| An amine initiator, viscosity reducer (hexadecylalcohol) and anti-slip agents | 14 |

The coated samples were cured or polymerized to a dry, hard state with a dose of 3 megarads of electron beam radiation by passing the coated paper at 30.5 meters per minute (100 fpm.) under an electron beam apparatus operating at 170 KV. The coating was cured in a nitrogen atmosphere.

Samples of the coated substrate were tested for various casting and panel pressing release applications as follows. In all cases the plastic sheet or film formed on or against the release surface of Example 1 released satisfactorily and produced a surface effect in the sheet or film which was the reverse of the surface effect on the release surface.

A. Vinyl casting

A polyvinyl chloride plastisol was cast onto the cured surface using a Gardner metering knife to set down a wet film of one millimeter thickness. The plastisol was dried for two minutes at 100°C and cured for 2 minutes at 190°C. Following this, the cast film was stripped from the radiation cured surface. The energy required to strip the film was measured by an Osgood-Sutermeister release tester, which provides a comparative measurement of the energy required to strip a sample of the cured film 3.8 cm.×7.7 cm. from the release paper. A satisfactory value for vinyl film is 70 Joules per square meter or less. The release paper of Example 1 gave a reading of 7 Joules per square meter.

B. Urethane casting

A film forming solution of polyurethane in a 1:1 mixture of isopropyl alcohol and toluene was cast upon the cured release surface of Example 1 using a meyer rod, dried and cured. The film was then stripped from the release surface in the Osgood-Sutermeister tester and found to strip satisfactorily as a self-supporting film with stripping energy of 64 Joules per square meter, a value considered satisfactory for urethanes.

C. Panel pressing

The release paper of Example 1 was tested and found satisfactory for use in the preparation of polyester and melamine panels, both high and low pressure.

i. Low Pressure Melamine Panels — Over a 19 mm. (3/4 inch) thick particle board (used as a base to impart strength and rigidity to the panel) was placed a porous decorative paper saturated with a partially cured melamine resin, commonly referred to in the trade as a melamine "prepreg". The release paper of Example 1 was placed over the prepreg with its release surface in contact with the prepreg, and the particle board, prepreg, and release paper were all placed between platens, and pressed at 23.6 Kg./cm.$^2$ (335 psi.) and 160°C. for 1-1/2 minutes. Upon removal from the press the release paper exhibited excellent release from the pressed panel. A rating of "easy" release was given to the release surface.

ii. High Pressure Melamine Panels — The release paper of Example 1 was placed over a composite for a high pressure consolidated decorative laminate. The composite consisted of three kraft sheets saturated with phenolic resin and a melamine-saturated, solid white decor sheet. The release paper of Example 1 was placed over the decor sheet and the total composite was placed between platens in a cold press. The laminate was consolidated at 84.5 Kg./cm.$^2$ (1200 psi.) and 149°C. for 24 minutes, after which the press was allowed to cool and the composite was removed. The release paper stripped cleanly from the laminate, and a rating of "easy" release was given to the release surface.

iii. Polyester Panels — The release paper of Example 1 was superimposed over the surface of a polyester decorative prepreg on a 19 mm. (3/4 inch) thick particle board. This sandwich with the release paper in contact therewith was placed in a press at 14 Kg./cm.$^2$ (200 psi.) and at a temperature of 230°C. for 8 minutes. The laminated panel was then removed from the press, and the release paper was stripped away to leave a clean panel surface. While release in this example was rated "tight", it was nevertheless satisfactory in all respects.

Examples 2—75

A paper substrate having an uncoated basis weight of about 89—142 grams per square meter (60—96 lbs. per ream) and a 15—22 grams per square meter (10—15 lbs. per ream) base coat of a conventional pigment/adhesive dispersion was top coated with the coating compositions described below. The coatings were polymerized with electron beam radiation in a nitrogen atmosphere at the line speeds (in meters per minute) and dosages listed below. In the examples, the coatings polymerized satisfactorily to a dry hard state and were tested for release properties by casting a film of polyurethane resin onto the release surface, drying for 1-1/2 minutes at 100°C. in a non-circulating air oven and curing for 1-1/2 minutes at 160°C. in an air circulating oven to form an approximately 25.4 microns (1 mil) thick film. The film in each example was stripped from the release surface in an Osgood-Sutermeister release tester and found to strip satisfactorily with the surface effect of the release surface replicated in reverse in the film. Cast polyurethane films tend to adhere very tightly to release surfaces, and stripping energy requirements below 70 Joules per square meter indicates that the surface is suitable for urethane release. However, the present invention provides much better performance than that for most urethane films and provides about that level or better for very hard to strip urethanes. The polyurethanes tested for release were: (1) UIK urethane, a dispersion of urethane in dimethyl formamide, supplied by Custom Chemicals, (2) Impranil D-353-a 35% solids dispersion of urethane in dimethyl formamide, supplied by Verona Dyestuff Div. of Mobay Chemical Corp., and (3) ENBO1, a very difficult to strip urethane provided as a 25% dispersion in a 3:2 DMF/MEK solution and provided by Byar Chemical Co.

The coating materials employed in the examples are listed below and designated by letters. The materials were mixed in the ratios indicated by weight.

| Material designation | Material description |
|---|---|
| A | Oligimer, a half-ester type of hydroxyalkyl acrylate-anhydride epoxide, containing 35% hydroxypropyl acrylate, Dow Chemical XD-7531.01. (two acrylic functional groups per molecule) |
| B | Oligimer, a vinyl-ester resin of Bisphenol A-glycidyl acrylate, Dow Chemical XD-8008.04. (two acrylic functional groups per molecule) |
| C | Oligimer, a neat diacrylate vinyl-ester resin, based on the addition reaction of an epoxy resin with the half ester of a hydroxy-alkyl acrylate and an anhydride, Dow Chemical XD-8036.02. (two acrylic functional groups per molecule) |
| D | Oligimer, an aliphatic Bisphenol A-diepoxide diacrylate of medium molecular weight, Dow Chemical XD-9016. (two acrylic functional groups per molecule) |
| E | Acrylic monomer, 1,6-hexanediol diacrylate. (two acrylic functional groups per molecule) |
| F | Acrylic monomer, 2-ethylhexylacrylate (one acrylic functional group per molecule) |
| G | Acrylic monomer, butyl acrylate. (one acrylic functional group per molecule, aliphatic, molecular weight 128) |
| H | Acrylic monomer, trimethylolpropane triacrylate. (three acrylic functional groups per molecule) |
| I | Acrylic monomer, neopentylglycol diacrylate. (two acrylic functional groups per molecule) |
| J | Acrylic monomer, ethylacrylate. (one acrylic functional group per molecule) |
| K | Acrylic monomer, tetraethyleneglycol diacrylate. (two acrylic functional groups per molecule) |
| L | Acrylic monomer, phenoxyethylacrylate. (one acrylic functional group per molecule) |
| M | Acrylic monomer, isodecylacrylate. (one acrylic functional group per molecule, aliphatic, molecular weight 212) |
| N | Polymer, poly(n-butylmethacrylate), (Du Pont Elvacite 2044), a linear thermoplastic polymer for viscosity. |
| O | Pigment, calcined diatomaceous earth (silicon dioxide), Johns-Manville Celite 263. |
| P | Pigment, coarse-ground calcium carbonate, Thompson-Wyman Atomite. |
| Q | Pigment, fumed silica, W. R. Grace Syloid 166. |
| R | n-Hexyl acrylate. (aliphatic, one acrylic functional group per molecule — molecular weight 156). |
| S | Hydroxyethyl acrylate. (one acrylic functional group per molecule). |
| T | Methoxyethyl acrylate. (one acrylic functional group per molecule). |
| U | Cyclohexyl acrylate. (cyclic monofunctional acrylate — molecular weight 155). |
| V | Lauryl ($C_{12}$) acrylate. (monofunctional aliphatic — molecular weight 240). |
| W | Octadecyl acrylate. (monofunctional aliphatic — molecular weight 324). |

| Ex. No. | Coating composition | Ratio of comp. | Rad. dose (mega-rads) | Line speed (mpm) | Release force (J/M²) | | |
|---|---|---|---|---|---|---|---|
| | | | | | (1) | (2) | (3) |
| 2 | A/E | 2:1 | 6 | 3.4 | 48.2 | | |
| 3 | A/E | 1:1 | 6 | 3.4 | 30.8 | | |
| 4 | B/E | 1:1 | 6 | 3.4 | 38.1 | | |
| 5 | B/E | 1:1 | 3 | 6.7 | 28.4 | 39.9 | |
| 6 | B/F/E | 1:1:1 | 6 | 3.4 | 36.3 | 55 | |
| 7 | E | — | 6 | 3.4 | 26.3 | | |
| 8 | C/E | 1:1 | 6 | 3.4 | 25.2 | 45.2 | |
| 9 | C/O | 95:15 | 6 | 3.4 | | 39.5 | |
| 10 | C/G | 7:3 | 12 | 3.4 | | 33.9 | |
| 11 | E/H | 4:1 | 6 | 3.4 | | 17 | |
| 12 | G/I | 1:1 | 6 | 3.4 | | 9.9 | |
| 13 | E/H/G | 4:1:5 | 6 | 3.4 | | 6.9 | |
| 14 | E/H/G | 4:1:5 | 5 | 12.8 | | 25.7 | |
| 15 | E/H/G | 4:1:5 | 4 | 12.8 | | 31.6 | |
| 16 | E/H/G | 4:1:5 | 3 | 12.8 | | 46.8 | |
| 17 | G/E/H/N | 10:8:2:1 | 3 | 14.1 | | 50.3 | |
| 18 | G/E/H/N | 10:8:2:1 | 6 | 14.1 | | 35.1 | |
| 19 | G/E/N | 10:10:1 | 6 | 14.1 | | 25.7 | |
| 20 | J/E/H/N | 10:8:2:1 | 3 | 14.1 | | 58.5 | |
| 21 | J/E/H/N | 10:8:2:1 | 6 | 14.1 | | 52.6 | |
| 22 | J/E/N | 10:10:1 | 3 | 14.1 | | 52.6 | |
| 23 | J/E/N | 10:10:1 | 6 | 14.1 | | 64.4 | |
| 24 | G/I/H/N | 10:8:2:1 | 3 | 14.1 | | 21.5 | |
| 25 | G/I/H/N | 10:8:2:1 | 6 | 14.1 | | 18.7 | |
| 26 | H/I | 1:1 | 5 | 14.1 | | 28.3 | |
| 27 | K | — | 5 | 14.1 | | 30.5 | |
| 28 | H/E/L | 1:4:10 | 6 | 3.7 | | 23.4 | |
| 29 | H/L/D | 1:2:2 | 8 | 3.7 | | 23.4 | |
| 30 | D/I | 5:2 | 6—8 | 3.7 | | 23.4 | |
| 31 | H/M/E | 1:5:4 | 6—8 | 3.7 | less than | 11.7 | |

8

| Ex. No. | Coating composition | Ratio of comp. | Rad. dose (mega-rads) | Line speed (mpm) | Release force (J/M²) (1) | (2) | (3) |
|---|---|---|---|---|---|---|---|
| 32 | H/M/L | 2:5:5 | 6 | 3.7 | | 17.6 | |
| 33 | H/M/L/P | 2:5:5:5 | 6 | 3.7 | | 17.6 | |
| 34 | H/M/L/P | 2:5:5:10 | 6 | 3.7 | | 23.4 | |
| 35 | H/M/D/L | 2:5:5:5 | 8 | 3.7 | | 11.7 | |
| 36 | H/M/D/L/P | 2:5:5:5:9 | 6 | 3.7 | | 29.3 | |
| 37 | H/M/D/L/P | 2:5:5:5:17 | 6 | 3.7 | | 26.9 | |
| 38 | H/L/P | 2:4:5 | 6 | 3.7 | | 11.7 | |
| 39 | H/L/P/Q | 4:8:5:1 | 6 | 3.7 | | 17.6 | |
| 40 | H | — | 2 | 5.5 | | 23 | |
| 41 | I/H | 1:2 | 4 | 5.5 | | 23 | |
| 42 | D/H | 1:2 | 4 | 5.5 | | 29 | |
| 43 | E/H | 1:2 | 4 | 5.5 | | 29 | |
| 44 | L/H | 1:2 | 4 | 5.5 | | 18 | |
| 45 | M/H | 1:2 | 2 | 5.5 | | <6 | |
| 46 | R/H | 1:2 | 2 | 5.5 | | 6 | |
| 47 | H/I | 1:2 | 4 | 5.5 | | 18 | |
| 48 | I | — | 4 | 5.5 | | 23 | |
| 49 | E/I | 1:2 | 4 | 5.5 | | 18 | |
| 50 | L/I | 1:2 | 2 | 5.5 | | 12 | |
| 51 | M/I | 1:2 | 2 | 5.5 | | <6 | |
| 52 | R/I | 1:2 | 2 | 5.5 | | 6 | |
| 53 | S/I | 1:2 | 4 | 5.5 | | 35 | |
| 54 | T/I | 1:2 | 4 | 5.5 | | 12 | |
| 55 | I/D | 1:2 | 4 | 5.5 | | 47 | |
| 56 | D | — | 2 | 5.5 | | 41 | |
| 57 | E/D | 1:2 | 4 | 5.5 | | 35 | |
| 58 | M/D | 1:2 | 6 | 5.5 | | 12 | |
| 59 | H/E | 1:2 | 4 | 5.5 | | 29 | |
| 60 | I/E | 1:2 | 6 | 5.5 | | 18 | |
| 61 | D/E | 1:2 | 4 | 5.5 | | 29 | |

**0 036 883**

| Ex. No. | Coating composition | Ratio of comp. | Rad. dose (mega- rads) | Line speed (mpm) | Release force (J/M²) | | |
|---|---|---|---|---|---|---|---|
| | | | | | (1) | (2) | (3) |
| 62 | E | — | 4 | 5.5 | | 35 | |
| 63 | M/E | 1:2 | 4 | 5.5 | | 6 | |
| 64 | G/H | 1:1 | 4 | 30.5 | | 12 | 41 |
| 65 | R/H | 1:1 | 4 | 30.5 | | 12 | 35 |
| 66 | U/H | 1:1 | 4 | 30.5 | | 12 | 76 |
| 67 | M/H | 1:1 | 4 | 30.5 | | 6 | 12 |
| 68 | R/M/H | 2:1:3 | 4 | 30.5 | | 12 | 18 |
| 69 | V/M/H | 2:1:3 | 4 | 30.5 | | 6 | 12 |
| 70 | W/M/H | 2:1:3 | 4 | 30.5 | | 6 | 12 |
| 71 | R/H | 1:1 | 2 | 61 | | 23 | >120 |
| 72 | M/H | 1:1 | 2 | 61 | | 12 | 64 |
| 73 | R/M/H | 2:1:3 | 2 | 61 | | 18 | >120 |
| 74 | V/M/H | 2:1:3 | 2 | 61 | | 6 | 23 |
| 75 | W/M/H | 2:1:3 | 2 | 61 | | 6 | 12 |

The preferred forms of the coating composition of the invention are capable of providing release for a wide variety of fibers and sheets formed on or against them. For example, Example 67 was tested satisfactorily for release of vinyl, urethane, and acrylic fibers cast upon it, transfer printing, panel pressing interleavers, high pressure and low pressure melamine pressing, polyester pressing and epoxy panel pressing. No prior art release coatings can provide such versatility.

**Claims**

1. A method of forming a plastic sheet or film, which comprises bringing the plastic on or against an easy release surface, setting the plastic in sheet or film form and stripping it from the release surface, the release surface having a substrate coated on at least one side with a coating composition characterised in that the coating composition comprises an acrylic functional material (i.e. a material containing a polymerizable acrylic group) which has been polymerized by electron beam radiation, some of the acrylic functional material having one acrylic group and some having three or more acrylic groups per molecule before polymerization.

2. A method of forming a plastic sheet or film, which comprises bringing the plastic on or against an easy release surface, setting the plastic in sheet or film form and stripping it from the release surface, the release surface having a substrate coated on at least one side with a coating composition characterised in that the coating composition comprises an acrylic functional material (i.e a material containing a polymerizable acrylic group) which has been polymerized by electron beam radiation, from about 15% to about 85% by weight of the acrylic functional material being provided by one or more aliphatic non-cyclic monofunctional acrylates and the remainder is provided by one or more multi-functional acrylates.

3. A method as claimed in claim 2, characterized in that the monofunctional acrylate material has a molecular weight of from 128 to 324 before polymerization.

4. A method as claimed in claim 2 or 3, characterized in that the monofunctional acrylate material has a molecular weight of from 212 to 324 before polymerization.

5. A method as claimed in any one of claims 2 to 4, characterized in that the monofunctional acrylate material provides from about 33% to about 66% of the total acrylic functional materials in the coating composition.

6. A method as claimed in claim 1 or 2, characterized in that the coating composition is a non-polysiloxane containing coating.

10

7. A method as claimed in any one of the preceding claims, characterised in that the plastic sheet or film is cast onto the release surface in a flowable state.

8. A method as claimed in claim 7, characterized in that the plastic sheet or film is polyurethane.

9. A method as claimed in claim 7, characterized in that the plastic sheet or film is polyvinyl chloride plastisol.

10. A method as claimed in any one of claims 1 to 6, characterized in that the plastic sheet or film is one lamina in a decorative heat and pressure consolidated decorative laminate and is pressed against the release surface during consolidation of the laminate.

11. A method as claimed in claim 10, characterized in that the plastic sheet or film pressed against the surface is the decor sheet or overlay sheet, and the release surface forms a surface effect in the decor sheet or overlay.

12. A method as claimed in claim 10, characterized in that the plastic sheet or film pressed against the release surface is the back most lamina which will later be glued to a reinforcing substrate, and the release surface substrate is coated on both sides with the coating composition and is an interleaver separating two groups of laminae consolidated in back-to-back configuration.

13. A method as claimed in any one of the preceding claims, characterized in that the acrylic functional material provides at least 30% by weight of the coating composition.

14. A method as claimed in claim 13, characterized in that the acrylic functional material provides at least 40% by weight of the coating composition.

15. A composite comprising a sheet-like substrate, a coating on at least one side of the substrate to provide a release surface, and on top of the release surface, a strippable sheet or film, characterized in that said release coating comprises an acrylic functional material (i.e. a material containing a polymerizable acrylic group) which has been polymerized by electron beam radiation, some of the acrylic functional material having one acrylic group and some having three or more acrylic groups per molecule.

16. A composite comprising a sheet-like substrate, a coating on at least one side of the substrate to provide a release surface, and on top of the release surface, a strippable sheet or film, characterized in that said release coating comprises an acrylic functional material (i.e. a material containing a polymerizable acrylic group) which has been polymerized by electron beam radiation from about 15% to about 85% of the acrylic functional material being provided by one or more aliphatic monofunctional acrylates and the remainder being provided by one or more multi-functional acrylates.

17. A composite as claimed in claim 15 or 16, characterized in that the sheet-like substrate is paper and further includes between the substrate and release surface a base coat to reduce penetration of the release surface coating into the paper substrate.

18. A composite as claimed in any one of claims 15 to 17, characterized in that acrylate material provides from about 33% to about 66% of the total acrylic functional materials in the coating composition.

19. A composite as claimed in any one of claims 15 to 18, characterized in that the coating composition is a non-polysiloxane containing coating.

## Patentansprüche

1. Verfahren zur Herstellung einer Kunststoffbahn oder -folie, wobei folgendes vorgesehen ist: Aufbringen des Kunststoffs auf oder an einer leicht ablösenden Flächen, Aushärten des Kunststoffs in Bahn- oder Folienform und Abstreifen desselben von der Ablösefläche, wobei die Ablösefläche ein Substrat beschichtet auf mindestens einer Seite mit einer Beschichtungszusammensetzung aufweist, dadurch gekennzeichnet, daß die Beschichtungszusammensetzung folgendes aufweist: ein Acryl-funktionelles Material (d.h. ein Material, welches eine polymerisierbare Acrylgruppe enthält, welches durch Elektronenstrahlbestrahlung polymerisiert wurde, wobei ein Teil des Acryl-funktionellen Materials eine Acrylgruppe und ein Teile drei oder mehr Acrylgruppen pro Molekül vor Polymerisation aufweist).

2. Verfahren zur Herstellung einer Kunststoffbahn oder -folie, wobei das Verfahren folgendes aufweist: Aufbringen des Kunststoffs auf oder an einer leicht ablösenden Oberfläche, Aushärten des Kunststoffs in Bahn- oder Folienform und Abstreifen desselben von der Ablösefläche, wobei die Ablösefläche ein Substrat überzogen auf mindestens einer Seite mit einer Überzugszusammensetzung aufweist, dadurch gekennzeichnet, daß die Überzugszusammensetzung ein Acryl-funktionelles Material (d.h. ein Material, welches eine polymerisierbare Acrylgruppe enthält) aufweist, welches durch Elektronenstrahlbestrahlung polymerisiert wurde, wobei von ungefär 15 bis ungefährt 85 Gew.-% des Acryl-funktionellen Materials durch eine oder mehrere aliphatische nicht-zyklische monofunktionelle Acrylate vorgesehen wird, und wobei der Rest durch ein oder mehrere multifunktionelle Acrylate vorgesehen ist.

3. Verfahren nach Anspruch 2, dadurch gekennzeichnet, daß das monofunktionelle Acrylatmaterial ein Molekulargewicht von 128 bis 324 vor der Polymerisation besitzt.

4. Verfahren nach Anspruch 2 oder 3, dadurch gekennzeichnet, daß das monofunktionelle Acrylatmaterial ein Molekulargewicht von 212 bis 324 vor der Polymerisation aufweist.

5. Verfahren nach einem der Ansprüche 2 bis 4, dadurch gekennzeichnet, daß das monofunktionelle Acrylatmaterial von ungefähr 33% bis ungeführ 66% der gesamten Acryl-funktionellen Materialien in der Überzugszusammensetzung bildet.

6. Verfahren nach Anspruch 1 oder 2, dadurch gekennzeichnet, daß die Überzugszusammensetzung ein kein Polysiloxan enthaltender Überzug ist.

7. Verfahren nach einem der vorhergehenden Ansprüche, dadurch gekennzeichnet, daß die Kunststoffbahn oder -folie auf die Ablösefläche in einem fließbaren Zustand gegossen wird.

8. Verfahren nach Anspruch 7, dadurch gekennzeichnet, daß die Kunststoffbahn oder -folie Polyurethane ist.

9. Verfahren nach Anspruch 7, dadurch gekennzeichnet, daß die Kunststoffbahn oder -folie Polyvinylchloridplastisol ist.

10. Verfahren nach einem der Ansprüche 1 bis 6, dadurch gekennzeichnet, daß die Kunststoffbahn oder -folie eine Schicht in einem dekorativen Wärme und Druck verfestigbaren dekorativem Laminat ist und während der Verfestigung des Laminats gegen die Ablösefläche gepreßt wird.

11. Verfahren nach Anspruch 10, dadurch gekennzeichnet, daß die gegen die Oberfläche gepreßte Kunststoffbahn oder-folie die Dekorbahn oder die obenliegende Bahn ist, wobei die Ablösefläche einen Oberflächeneffekt in der Dekorbahn oder der obersten Lage bildet.

12. Verfahren nach Anspruch 10, dadurch gekennzeichnet, daß die gegen die Ablöseoberfläche gepreßte Kunststoffbahn oder -folie die am weitesten hinten gelegene Schicht ist, die später auf ein Verstärkungssubstrat geklebt wird, und wobei das Ablöseflächensubstrat auf beiden Seiten mit der Überzugszusammensetzung beschichtet ist und eine Zwischenlage bildet, die zwei Schichtengruppen trennt, die in einer gegeneinander liegenden Konfiguration verfestigt werden.

13. Verfahren nach einem der vorhergehenden Ansprüche, dadurch gekennzeichnet, daß das Acryl-funktionelle Material mindestens 30 Gew.-% der Überzugszusammensetzung bildet.

14. Verfahren nach Anspruch 13, dadurch gekennzeichnet, daß das Acryl-funktionelle Material mindestens 40 Gew.-% oder Überzugszusammensetzung vorsieht.

15. Verbundmaterial, welches folgendes aufweist: ein bahnförmiges Substrat, einen Überzug auf mindestens einer Seite des Substrats um eine Ablösefläche zu bilden und auf der Oberseite der Ablöseoberfläche eine abstreifbare Bahn oder eine Folie, dadurch gekennzeichnet, daß der Ablöseüberzug ein Acryl-funktionelles Material (d.h. ein Material, welches eine polymerisierbare Acrylgruppe enthält) aufweist, welches durch Elektronenstrahlbestrahlung polymerisiert wurde, wobei ein Teil des Acryl-funktionellen Materials eine Acrylgruppe aufweist, wobei ein anderer Teil drei oder mehr Acrylgruppen pro Molekül aufweisen.

16. Verbundmaterial, welches folgendes aufweist: ein bahnförmiges Substrat, einen Überzug auf mindestens einer Seite des Substrats, um eine Ablösefläche zu bilden und auf der Oberseite der Ablöseoberfläche eine abstreifbare Bahn oder eine Folie, dadurch gekennzeichnet, daß der Ablöseüberzug folgendes aufweist: ein Acryl-funktionelles Material (d.h. ein Material, welches eine polymerisierbare Acrylgruppe enthält), welches durch Elektronenstrahlbestrahlung polymerisiert wurde, wobei ungefähr 15% bis ungefähr 85% des Acryl-funktionellen Materials durch eines ober mehrere aliphatische monofunktionelle Acrylate vorgesehen wird, und wobei der Rest durch eines oder mehrere multifunktionelle Acrylate vorgesehen ist.

17. Verbundmaterial nach Anspruch 15 oder 16, dadurch gekennzeichnet, daß das bahnförmige Substrat Papier ist und ferner zwischen dem Substrat und der Ablösefläche einen Grundüberzug aufweist, um das Eindringen des Ablöseflächenüberzugs in das Papiersubstrat zu vermindern.

18. Verbundmaterial nach einem der Ansprüche 15 bis 17, dadurch gekennzeichnet, daß das Acrylatmaterial von ungefähr 33% bis ungefähr 66% der gesamten Acryl-funktionellen Materialien in der Überzugszusammensetzung bildet.

19. Verbundmaterial nach einem der Ansprüche 15 bis 18, dadurch gekennzeichnet, daß die Überzugszusammensetzung ein kein Polysiloxan enthaltender Überzug ist.

**Revendications**

1. Procédé de formation d'un film ou d'une feuille plastique, selon lequel on met le plastique sur une surface de détachement ou contre celle-ci, on durcit le plastique sous forme de feuille ou de film et on l'arrache de la surface de détachement, la surface de détachement ayant un substrat, revêtu sur une face au moins, d'une composition d'enduction, caractérisé en ce que la composition d'enduction comprend une matière à fonction acrylique (c'est-à-dire une matière contenant un groupe acrylique polymérisable) qui a été polymérisée par rayonnement électronique, une partie de la matière à fonction acrylique ayant un groupe acrylique et une autre partie portant trois groupes acryliques ou plus par molécule, avant polymérisation.

2. Procédé de formation d'un film ou d'une feuille plastique, selon lequel on met le plastique sur une surface de détachement facile ou contre celle-ci, on durcit le plastique sous forme de feuille ou de film et on l'arrache de la surface de détachement, la surface de détachement ayant un substrat enduit sur une face au moins d'une composition d'enduction, caractérisé en ce que la composition d'enduction comprend une matière à fonction acrylique (c'est-à-dire une matière contenant un groupe acrylique polymérisable) qui a été polymérisée par rayonnement électronique, d'environ 15 à 85% en poids de matière à fonction acrylique étant fournis par un ou plusieurs acrylates mono-fonctionnels non-cycliques aliphatiques et le restant étant fourni par un ou plusieurs acrylates multi-fonctionnels.

3. Procédé selon revendication 2, caractérisé en ce que l'acrylate mono-fonctionnel a un poids moléculaire de 128 à 324 avant polymérisation.

4. Procédé selon l'une quelconque des revendications 2 ou 3, caractérisé en ce que l'acrylate mono-fonctionnel a un poids moléculaire de 212 à 324 avant polymérisation.

5. Procédé selon l'une quelconque des revendications 2 à 4, caractérisé en ce que l'acrylate mono-fonctionnel fournit d'environ 33 à 66% du total des matières à fonction acrylique dans la composition d'enduction.

6. Procédé selon l'une quelconque des revendications 1 ou 2, caractérisé en ce que la composition d'enduction donne un enduit ne contenant pas de polysiloxane.

7. Procédé selon l'une quelconque des revendications précédentes, caractérisé en ce que la feuille ou le film plastique est coulé sur la surface de détachement à l'état fluide.

8. Procédé selon la revendication 7, caractérisé en ce que le film ou la feuille plastique est en polyuréthane.

9. Procédé selon la revendication 7, caractérisé en ce que le film ou le feuille plastique est un plastisol de chlorure de polyvinyle.

10. Procédé selon l'une quelconque des revendications 1 à 6, caractérisé en ce que la feuille ou le film plastique est un feuillet dans un feuilleté décoratif consolidé par la chaleur et la pression et qu'il est pressé contre la surface de détachement pendant la consolidation du feuilleté.

11. Procédé selon la revendication 10, caractérisé en ce que le film ou la feuille plastique pressé contre la surface, est une feuille de décor ou une feuille de recouvrement et que la surface détachable forme un effet de surface dans la feuille de décor ou de recouvrement.

12. Procédé selon la revendication 10, caractérisé en ce que la feuille ou le film plastique pressé contre la surface détachable est le feuillet le plus en arrière, qui sera ensuite collé sur un substrat de renfort et que le substrat de la surface détachable est revêtu sur les deux faces d'une composition d'enduction et est un intercalaire séparant deux groupes de feuillets consolidés en une configuration dos-à-dos.

13. Procédé selon l'une quelconque des revendications précédentes, caractérisé en ce que la matière à fonction acrylique constitue au moins 30% en poids de la composition d'enduction.

14. Procédé selon la revendication 13, caractérisé en ce que la matière à fonction acrylique constitue au moins 40% en poids de la composition d'enduction.

15. Produit composite comprenant un substrat de type feuille, un enduit sur une face au moins du substrat pour fournir une surface de détachement et une feuille ou un film arrachable sur la surface détachable, caractérisé en ce que cet enduit de détachement comprend une matière à fonction acrylique (c'est-à-dire une matière contenant un groupe acrylique polymérisable) qui a été polymérisée par rayonnement électronique, une partie de cette matière à fonction acrylique portant un groupe acrylique et une autre portant trois groupes acryliques ou plus par molécule.

16. Produit composite comprenant un substrat en forme de feuille, un enduit sur une face au moins du substrat pour fournir une surface de détachement et une feuille ou un film arrachable sur la surface de détachement, caractérisé en ce que cet enduit de détachement comprend une matière à fonction acrylique (c'est-à-dire une matière contenant un groupe acrylique polymérisable) qui a été polymérisée par rayonnement électronique, d'environ 15 à 85% de la matière à fonction acrylique étant fournis par un ou plusieurs acrylates mono-fonctionnels aliphatiques et le restant étant fourni par un ou plusieurs acrylates multi-fonctionnels.

17. Produit composite selon l'une quelconque des revendications 15 ou 16, caractérisé en ce que le substrat de type feuille est du papier et comprend de plus, entre le substrat et la surface de détachement, une couche de base pour réduire la pénétration de l'enduit de la surface de détachement dans le substrat de papier.

18. Produit composite selon l'une quelconque des revendications 15 à 17, caractérisé en ce que la matière acrylique fournit environ 33 à 66% de l'ensemble des matières à fonction acrylique dans la composition d'enduction.

19. Produit composite selon l'une quelconque des revendications 15 à 18, caractérisé en ce que la composition d'enduction donne un enduit ne contenant pas de polysiloxane.